# EUROPEAN PATENT SPECIFICATION

(11) **EP 2 979 343 B1**
(45) Date of publication and mention of the grant of the patent: **27.06.2018**
(21) Application number: 14712721.1
(22) Date of filing: 18.03.2014
(51) Int. Cl.: H02J 3/14

(54) **POWER SYSTEM CONTROL**
SYSTEMLEISTUNGSSTEUERUNG
SYSTÈME DE COMMANDE DE SYSTÈME ÉLECTRIQUE

(30) Priority: 25.03.2013 GB 201305404
(43) Date of publication of application: 03.02.2016
(73) Proprietor: Imperial Innovations Limited, South Kensington London SW7 2PG (GB)
(72) Inventor: THORNHILL, Nina Frances, Guildford GU4 8PW (GB); PAL, Bikash, Carshalton Beeches SM5 4PW (GB); FABOZZI, Davide, 72070 Tübingen (DE)
(74) Representative: Shipp, Nicholas
(86) International application number: PCT/GB2014/050851
(87) International publication number: WO 2014/155062

(56) References cited:
- WO-A2-2012/106389
- US-A1- 2011 172 837
- US-A1- 2012 065 792

## Description

### Field of Invention

This disclosure relates to control of power networks. More specifically, but not exclusively, the disclosure relates to a method and corresponding apparatus for control of power provided by available power reserves to control power network frequency.

### Background to the Invention

Power generated by power generators, such as power stations, is distributed by a power network to loads, such as residential or industrial property, for consuming the power.

When distributing power, the voltage and frequency characteristics of the distributed power must be tightly controlled because many electrical systems rely on prior knowledge of these voltage and/or frequency characteristics. Since many loads connected to a power network are designed to operate in a strict frequency band around the nominal frequency, e.g. 50Hz in the UK, control of the frequency of the power supplied to loads is of utmost importance.

The system frequency is influenced by the balance between supply and demand of power in the network. If production exceeds consumption, this results in an increase of the system frequency. Most traditional forms of power supply come from rotating generators turning at the frequency of the system, and this frequency is related to the RPM of the generators themselves. If generated power is sufficient to meet the demand, the frequency increases as the RPM increases. Conversely, when consumed power exceeds produced power, generator RPM and the system frequency decrease. Since economical, extensive and efficient electric energy storage is yet to be found, a balance between produced and consumed active power must be maintained and frequency control is needed in power systems where generation does not match demand.

Traditionally, loads have been regarded as the uncontrollable part of the system, whilst generators and transmission equipments have been relied upon to provide power system control actions. The increasing share of renewable energies, however, has reduced the overall controllability of power generation, as the output of renewable generators is only partly controllable and largely unpredictable: for instance, one cannot precisely schedule the production of a wind farm, as this depends on the wind inflow. Frequency quality degradation in the last decade, which is primarily seen to be a result of the growth of the renewable energy sector, led Transmission System Operators (TSOs) to re-examine frequency control services and enlarge the pool of available reserves, mainly by allowing participation of industrial processes or loads. Increased participation of industrial loads in power system operation has several benefits: enlarging the pool of available reserves, reducing the procurement cost of reserves, and unlocking additional revenue for the process industry. In other words, by utilising loads as well as sources in power network management, the power can be balanced more easily.

At present, power reserves are provided by a set of frequency control reserves, which are units that can vary their power at the TSO's request. These reserves can be power sources or loads. Although slightly different in their implementation, most frequency control reserves can be ascribed to three categories: Frequency Containment Reserves (FCRs), Frequency Restoration Reserves (FRRs) and Replacement Reserves (RRs) in accordance with a recommendation proposed by a task force of the European Network of Transmission System Operators for Electricity (ENTSO-E). These three service types are described in more detail below.
- FCRs: their objective is to stabilise frequency to an acceptable value within tens of seconds. FCR acts in a fast, automatic and decentralised way. Most industrial loads are unlikely to be able to provide this service, other than by the inertial response of their rotating machinery. Hydroelectric power stations and gas-fired power stations are examples of FCR.
- FRRs: their objective is to restore the frequency to its nominal value in order to relieve the units participating in FCR service. Additionally, they restore the inter-area power flows (in the case of a multi-area system), to their scheduled values. The time frame of FRR action ranges from tens of seconds to tens of minutes. Thermal generators and one experimental use of an aluminium smelter are examples of FRR.
- RRs: the slowest reserves, activated manually in response to a request from the control centre in order to free up the units participating in FCR and FRR controls. RR acts in a time frame from tens of minutes to hours. Loads such as industrial batch processes, metal processing plants and paper mills are used across many systems as RR (or in general any load of significant size - of the order of magnitude of MW - with even primitive regulation capabilities, e.g. a greenhouse or an industrial refrigerator).
The control philosophy of the above schemes is that imbalances are first counteracted by FCR. FRR then start acting as soon as they can in order to relieve the units used in FCR. The RR finally relieves both FCR and FRR. Usually, the different services are characterised by a ramp-up time, i.e. a period of time to provide the maximum power output from receipt of an instruction for power delivery, maximum deliverable power, a minimum duration of sustained maximum output and a period of time to reduce the power delivery from the maximum deliverable power to the scheduled power (unwinding the service). Reserve services may be provided by multiple units, with the global response equal the sum of the parts of the reserve type. While the state of the art solution does help to balance the power in the system and control the system frequency, it also presents various problems. For example, one common characteristic of the state of the art solution is that the flexibility of participating units has to fit into one of the reserve services tendered by the TSO. The unintended consequence of this is that some reserve capacity is left partially or totally unused and unpaid for because there is not one service that can accommodate a reserve that could be potentially offered. This can result in a higher cost of reserves. In addition, the state of the art system works by always assigning the most effective reserve to initially deal with system power imbalances. This increases the cost of power generation in the system, because the fastest units are generally the most expensive ones. Furthermore, due to the increase in use of renewable energy sources in electricity networks, the overall share of unpredictable power is ever increasing within such networks, although not in a linear way, for example the power delivered by a wind farm may be dependent on local weather events, which could be, to some extent, forecasted. US 2011/172837 A1 discloses a utility employing an active load management system (ALMS) that estimates operating reserve for possible dispatch to the utility or another requesting utility. Responsive to receiving a request for operating reserve, the ALMS determines whether stored power data alone or in combination with projected energy savings from a control event is sufficient to meet the operating reserve requirement. The ALMS can then dispatch power from power storage devices to a power grid to meeting the operating reserve need. US 2012/065792 A1 discloses a supply-demand controller which has a first predicting unit to predict a power demand required by each of a number of customers. It also predicts power supply from a power system calculated with respect to each power generating unit. A balancing unit obtains a supply-demand margin level based on weighted sums of the predictive power demand and predictive power supply. A plan creator creates a plan for controlling power used by the controllable appliance of the customer based on the supply-demand margin level. WO 2012/106389 A2 discloses systems to provide improved control and coordination of a multiplicity of electric distribution grid-connected energy storage units deployed over a geographically-dispersed area.

### Summary of Invention

In accordance with an aspect of the invention there is provided a method for allocating a plurality of power reserves to deliver power to a power network to meet a power reserve requirement for balancing a frequency of the power network. The method comprises obtaining, for a plurality of power reserves of a power network, power reserve flexibility characteristics associated with each power reserve. The method further comprises obtaining, for the plurality of power reserves, an indexing value associated with the delivery of power by each of the power reserves. The method further comprises determining a power reserve requirement associated with the power network. The method further comprises assigning one or more of the plurality of power reserves to deliver power to the power network, the plurality of power reserves assigned in accordance with the power reserve flexibility characteristics associated with each of the power reserves, the indexing value associated with each of the power reserves, and the power reserve requirement associated with the power network.

The power reserve flexibility characteristics may be indicative of power deliverable to the power network by the respective power reserve with respect to time.

The power reserve flexibility characteristics may include characteristics of positive and/or negative power reserve flexibility.

The power reserve flexibility characteristics may include one or more of a maximum deliverable power, a period of time to provide the maximum deliverable power from receipt of an instruction for power delivery, a minimum duration for sustaining the maximum deliverable power and a period of time to reduce power delivery from the maximum deliverable power to a minimum deliverable power.

The assigning of one or more of the plurality of power reserves further comprises selecting one or more of the plurality power reserves to provide the power reserve requirement in order of the indexing value associated with the power reserve.

The method may further comprise ordering the power reserves in accordance with the indexing value associated with each power reserve prior to selecting the one or more power reserves to provide the power reserve requirement.

The assigning of one or more of the plurality of power reserves may further comprise determining a portion of the power reserve requirement of the power network provided by each selected power reserve in accordance with the respective power reserve flexibility characteristics of the power reserves.

Assigning the one or more power reserves may further comprise determining if, for a particular instance in time, the power reserve requirement is met by the assigned one or more power reserves, assigning a next power reserve to deliver power to the power network if the power reserve requirement is not met, the next power reserve determined from the order of the indexing values associated with the respective power reserves and adjusting a power to be delivered to the power network by a most recently allocated reserve of the one or more power reserves that have been assigned to provide power at that instant in time to a level of power sufficient to meet the power reserve requirement at that instant in time if the power reserve requirement is met.

The power to be delivered by the most recently allocated reserve may be adjusted by subtracting the difference between the power reserve requirement at that instant in time and a summation of a power to be delivered at that instant in time by each of the power reserves assigned to deliver power at that instant in time from the power to be delivered at that instant in time by the most recently allocated reserve assigned to deliver power at that instant in time.

Assigning the one or more power reserves may further comprise determining if the one or more assigned power reserves provide the power reserve requirement, continuing assigning the reserves if the power reserve requirement is not met and stopping the assigning the reserves if the power reserve requirement is met.

The method may further comprise determining, prior to assigning one or more of the power reserves, whether or not the plurality of power reserves will be able to provide the power reserve requirement from the power reserve flexibility characteristics associated with the plurality of power reserves.

The power reserve requirement associated with the power network may be a power required to be delivered to the network over a period of time.

The power reserve requirement associated with a power network may be determined by estimating a power reserve requirement associated with the power network.

The power reserve flexibility characteristics may be obtained from a memory. The indexing value may be obtained from a memory.

The method may further comprise receiving the power reserve flexibility characteristics and receiving the indexing values.

The power reserve flexibility characteristics associated with the power reserves may be received from the respective power reserves.

The method may further comprise instructing the power reserves to deliver power in accordance with the assignment of the power reserves.

A power reserve may be a power generator or a power load.

The indexing value may be a financial cost associated with the power reserve delivering the power.

The indexing value may be an environmental impact associated with the power reserve delivering the power.

In accordance with another aspect of the invention there is provided an apparatus for allocating a plurality of power reserves to deliver power to a power network to meet a power reserve requirement of the power network. The apparatus comprises a processor arranged to perform any method disclosed herein.

The apparatus may be a central controller associated with management of the power network.

In accordance with another aspect of the invention there is provided a computer readable medium comprising computer readable code operable, in use, to instruct a computer to perform any method disclosed herein.

According to an aspect of the invention there is provided a method for allocating power reserves in a power network. The method comprises determining a power reserve requirement associated with the power network. The method then comprises assigning power reserves associated with the network to deliver power for meeting the power reserve requirement, the power reserves assigned according to an indexing value associated with delivery of power by respective power reserves. Throughout this disclosure it will be understood that each indexing value assigned to a power reserve may correspond to a financial cost associated with that reserve.

According to another aspect of the invention there is provided a method for allocating power reserves in a power network. The method comprises determining a power reserve requirement associated with the power network. The method then comprises assigning power reserves associated with the network for meeting the determined power reserve requirement, the power reserves assigned according to a power response characteristic associated with each of the power reserves.

According to a further aspect of the invention a method for allocating power resources provided by a plurality of power reserves in a power network to meet a power reserve requirement of the power network is provided. The method comprises obtaining, for a plurality of power reserves, information indicative of power response characteristics associated with power resources provided by the respective power reserves. The method also comprises obtaining, for the plurality of power reserves, information indicative of an indexing value associated with the power resources provided by the respective power reserves. In addition, the method comprises determining a power reserve requirement associated with a power network. The method also comprises assigning one or more power resources provided by the plurality of power reserves in accordance with the power response characteristics and the indexing value associated with each power resource provided by the plurality of power reserves to provide the power resource requirement.

The power response characteristic may be considered as a deliverable power response of a power reserve. Also the power response characteristic may be considered as a mapping of the highest power and longest duration positive and negative power response with respect to time associated with a power reserve.

Such a system of mapping of power reserve supply and reserve requirement allows for simple description of any flexible resource, intermittent source or frequency service regardless of their particular dynamic response. Once the method is complete, the reserve requirement may be fully accounted for by the cumulative supply provided by the least expensive available reserves. The method may be applicable to forecasted worst-case intermittency, or can be applied to state of the art frequency control services such that reserves are allocated to individual FCR, FRR or RR services. The cumulative supply can be decomposed to determine and share cost of intermittency. The method may provide intuitive visual reserve adequacy assessment and user input allocation via a user interface.

The methods described herein allow for available resources to be used to their fullest which can bring down the price of reserves and may lead to a significant cost reduction for the various system operators by enlarging the pool of available reserves.

A system for defining resources irrespective of type is disclosed. Consequently, a single definition system is provided to identify the power characteristics of flexible resources, intermittent resources, or frequency services regardless of their particular dynamic response.

A system that enables a user to be provided with a visual reserve adequacy assessment and reserve distribution is disclosed.

### Brief Description of the Drawings

Exemplary embodiments of the invention shall now be described with reference to the drawings in which:
Figure 1 illustrates an exemplary electricity network including a number of power reserves;
Figure 2 shows a communication network including a central controller arranged to control a plurality of power reserves such as the power reserves shown in Figure 1;
Figure 3 shows characteristics of power delivery of power reserves in terms of power delivery over time;
Figure 4 shows the method performed by the central controller of Figure 2 for allocating power reserves to provide a power reserve requirement of the power network;
Figure 5 shows a power reserve requirement of the power network in MW over time from time 0 to time tₓ;
Figure 6 shows a visual depiction of the assignment of reserves using the method of assigning FCR, then FRR and then RR for determining whether or not the available reserves are adequate to supply the power reserve requirement;
Figure 7a shows the assignment of a first power reserve;
Figure 7b shows the assignment of a second power reserve;
Figure 7c shows the assignment of a third power;
Figure 7d shows the assignment of a fourth power reserve; and
Figure 7e shows the assignment of all power reserves for providing a power resource requirement.

Throughout the description and the drawings, like reference numerals refer to like parts.

### Specific Description

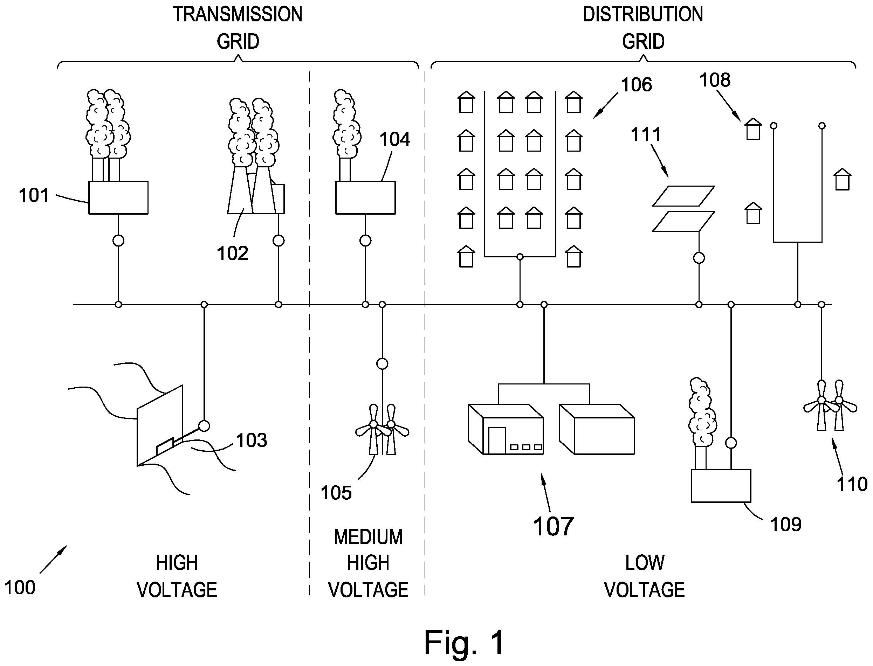

Figure 1 provides an example of an electricity network 100, wherein the allocation of the reserves of such a network can be controlled using a method provided according to embodiments of the present invention.

The electricity network 100 comprises a transmission grid which is primarily where electricity is transported and a distribution grid which is primarily where loads use the power generated in the system.

The transmission grid comprises a high voltage section connected to a plurality of power sources, such as a coal fuelled power station 101, a nuclear power station 102, and a hydroelectric power station 103. The power produced at the power stations is then transmitted over long distances. The electricity transmitted by the high voltage section will then be stepped down by a substation (not shown) to a medium high voltage for local distribution. When at medium high voltage, additional voltage sources may also add power to the network. In Figure 1, a further coal power station 104 and a wind farm 105 are shown as providing additional power at this stage.

A local substation then steps the power down to a low distribution voltage. The power is then distributed to various loads such as a town of densely populated housing 106, industrial buildings such as factories 107, and other remote houses 108. At the distribution level, there may also be power sources as well as power loads. For example, Figure 1 shows a local power station 109, a small wind farm 110, and solar panels 111.

The power network 100 therefore comprises a plurality of power units: power sources 101, 102, 103, 104, 105, 109, 110, 111 that produce energy and power loads 106, 107, 108 that consume energy. Both the sources and loads can be categorised into two equivalent groups. The sources can be categorised as being either intermittent or flexible, while the loads can be equivalently categorised as being uncontrollable or controllable. The meaning of these categorisation types is set-out below.

Intermittent sources are sources that exhibit an involuntary change in power production and therefore do not provide a constant resource and cannot therefore be relied upon to provide power for frequency adjustment purposes at a given time. Examples of intermittent sources are renewable energy resources such as wind farms and solar cells, which rely on the presence of wind and solar energy respectively. Uncontrollable loads are not capable of voluntarily controlling their level of power consumption. Examples of uncontrollable loads are heating systems for large hospitals and energy consumption of residential neighbourhoods. Hence, the terms intermittent and uncontrollable both refer to an inconsistent, intermittent or uncontrollable production or consumption of power.

Flexible sources exhibit a voluntary change in power production and are therefore capable of providing power at all times and can be used quite flexibly when being allocated. Examples are hydro generators fed by alpine reservoirs or pump storage or gas-fired power plants. Controllable loads on the other hand have the capacity to monitor and voluntarily control the level of power they consume. Examples are aluminium smelters or cement mills. In other words, the terms flexible and controllable are used to refer to sources and loads that are able to deliver or consume reserve power at all times and that are flexible with respect to the amount of reserve power delivered or consumed at all times.

Power reserves can be positive or negative. Positive reserves counteract a power deficit, whereas negative reserves counteract a power surplus.

It can therefore be seen that eight kinds of power unit exist: positive intermittent sources, positive uncontrollable loads, negative intermittent sources, negative uncontrollable loads, positive flexible sources, positive controllable loads, negative flexible sources and negative controllable loads. The final four units of this list can be used as power reserves. The first four are the sources of intermittency that create the problem that the system disclosed herein is trying to solve.

Intermittent sources and uncontrollable loads cause imbalances in the system and therefore fluctuations in frequency. Flexible sources and controllable loads can be used to counteract these fluctuations by providing more or less power to the system at any time. These power units are known as power reserves, i.e. power sources or loads used for controlling the power imbalance in the electricity network caused by intermittent sources and uncontrollable loads.

In accordance with this exemplary embodiment of the invention, a control mechanism is provided for allocating the reserves in a way that makes best use of the different reserves' characteristics. This control mechanism is known as Flexibility and Intermittency Description of Electric power Systems (FIDES), and will now be discussed.

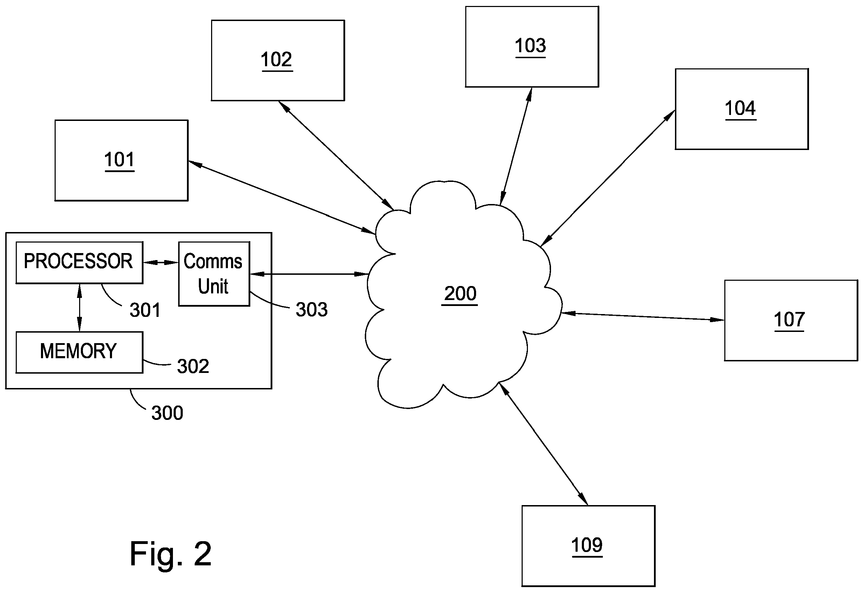

Figure 2 shows the communication network utilized for control of the power reserves for frequency control of the electricity network 100 of Figure 1. Those power units that are most suitable for acting as power reserves for system frequency control, i.e. power units 101, 102, 103, 104, 107, and 109 shown in Figure 1, are communicatively coupled to a central controller 300 via network 200. It will be appreciated that other power units, such as individual houses in the group of houses 106 could install the functionality to allow them to act as a resource if required, but since such circumstances are unlikely to occur in the near future, the houses 106 are not shown as a load in this system. However, a distribution systems operator (DSO) may aggregate the flexibility of these units and this aggregate flexibility may participate in frequency control, to the mutual benefit of the TSO, DSO and customers.

The central controller 300 is a central processing device arranged to balance the system to ensure that power reserve supply matches a power reserve requirement, i.e. the amount of power required to be delivered by power reserves to control the frequency of the system. The central controller comprises a processor 301 arranged to perform the necessary processing to control the power network, a memory 302 arranged to store the code and other information required for performing the processing, and a communications unit 303 arranged to receive information from and transmit information to the reserves. The central controller 300 is a data processing system used by a TSO for providing such frequency control functionality. In certain embodiments, the functionality of the central controller 300 is software-based and is provided on a server of the TSO. It will be appreciated that the processor 301 and memory 302 may be provided in a separate unit to the communications unit 303 in order that, in the case of a fault in either the processing unit or the communications unit, there is no adverse effect on the other process.

Each of the reserves is provided with similar processing and communications functionality in order to enable them to provide the functionality that will be described in more detail below. It will be appreciated that any flexible source or controllable load connected to the electricity network 100 can be considered a reserve for the purpose of assisting in controlling the frequency of the electricity network 100 provided it has such processing and communications functionality.

In order to determine how best to allocate resources each of the reserves sends information to the central controller indicative of characteristics of the power that can be delivered, such as a ramp-up time, i.e. a period of time to provide the maximum power output from receipt of an instruction for power delivery, maximum deliverable power, minimum duration of sustained maximum output, and a ramp-down time, i.e. a period of time to reduce the power output from the maximum to a minimum deliverable power output, for example, zero. These characteristics may be sent to the central controller in an encoded or graphical format, such as a tile. The central controller 300 then uses all of the information collated from the different reserves available in order to determine how best to utilize the power sources available to deliver the power required by the system.

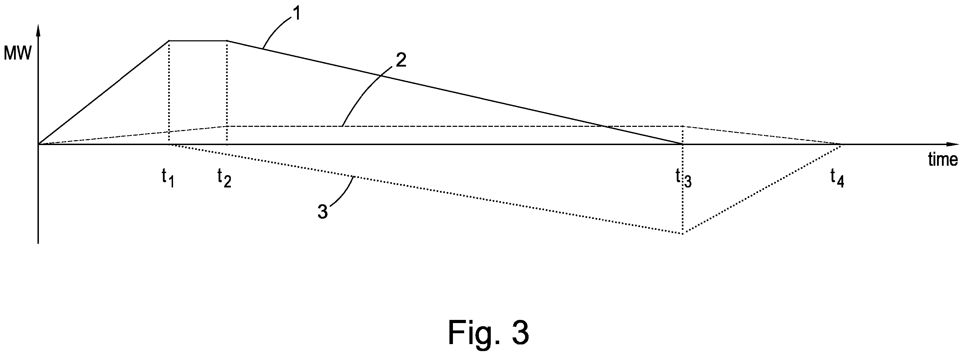

Firstly, the characteristics of the power delivery of the respective power reserves shall be considered with reference to Figure 3. In Figure 3, the highest power and longest duration power reserve of various components of an electrical power network is mapped against time to give a visual representation of the respective period of time to provide the maximum power output from receipt of an instruction for power delivery, the maximum deliverable power and the minimum duration of sustained maximum output, and the respective period of time to reduce power output from the maximum to a minimum deliverable power output, for example, zero. The totality of these characteristics can be graphically represented as a tile. These power characteristics of reserves shall hereinafter be referred to as power reserve flexibility characteristics. It will be appreciated that the delivery of a power reserve could be negative or positive to compensate for positive and negative frequency imbalances respectively.

In Figure 3, curve 1 represents the power reserve flexibility characteristics for a first positive power flexibility source. It can be seen that the source is able to provide a high power with a fast ramp-up time, i.e. time, t_{1,} to provide a maximum power. The source then provides this level of power for a short period until t₂, after which the power level ramps down, i.e. the power provided tends to zero, until t₃.

Curve 2 shows the power reserve flexibility characteristics for a second positive power flexibility source. This has a slightly slower ramp-up time t₂ compared to curve 1, and a lower maximum power compared to curve 1. The source associated with curve 2 maintains its output until t₃, after which the power ramps down until t₄.

Curve 3 shows a negative power flexibility source. It can be seen that this has pure delay, t₁, i.e. it takes a given period of time to start delivering power, a maximum power delivery level is then reached at t₃, after which the power delivery ramps down until t₄.

While the power reserve flexibility characteristics of the power units shown in Figure 3 are either positive or negative, it will be appreciated that some power units may provide both positive and negative power reserves.

The benefit of mapping the power reserve flexibility characteristics of power flexibility reserves is that various components of frequency dynamics of networks can be readily compared and this information can then be used to compare intermittency (the problem) with frequency services (the potential solution) and with flexible reserves (the providers of the solution). In Figure 3, the area beneath each curve represents the maximum energy consumed or supplied by the associated component. This form of representation of both flexible power sources and controllable power loads means that a single representative form can be provided for reserves regardless of them being generators or loads. A similar and comparable representation can be obtained for the intermittency of intermittent sources whether they be uncontrollable loads or renewable generators. By taking correlation into account, the intermittency curves of all system elements may be combined into an aggregate intermittency curve of the whole system that represents the worse possible negative and positive imbalance that reserves should be designed to counteract successfully.

Composite curves may be obtained or created to represent a combination of electrical sources or loads on a network. For example, in Figure 1 the industrial buildings 107 can be treated as a combined group and therefore a combined power reserve. However, further groupings could be applied if appropriate. In the case of flexibility curves, the curves are summed rather than correlated. Simple algebraic rules of series and parallel can be applied to obtain such composite curves. For example, a second reserve may be activated once a first reserve is at a maximum power (series), or both reserves may be activated simultaneously (parallel). Any possible delay and partial superposition may be applied to the activation of the second reserve in relation to the first or within the same reserve.

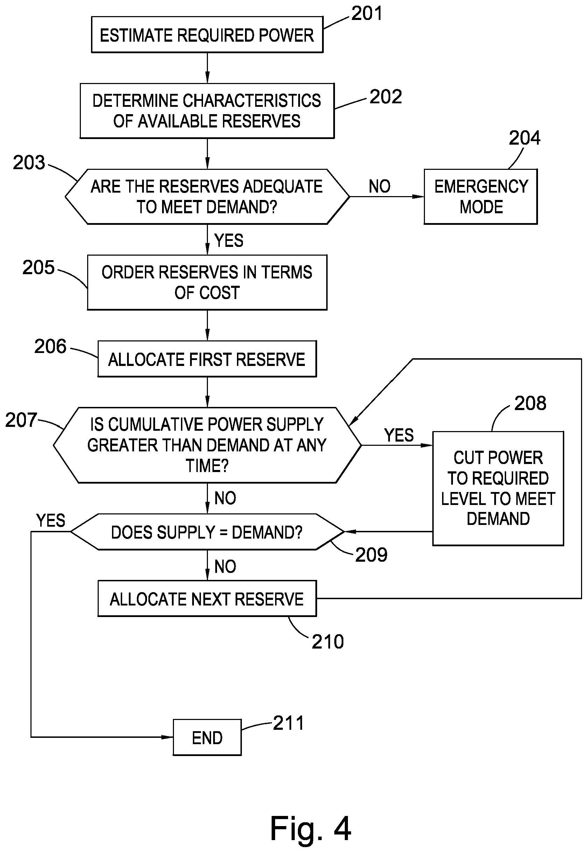

A method that uses the power reserve flexibility characteristics of Figure 3 in order to optimise the allocation of power in the electricity power network 100 shall now be discussed in detail with reference to Figure 4.

Figure 4 shows the method performed by the central controller 300 shown in Figure 2 for allocating power from the various power reserves available in the power network 100.

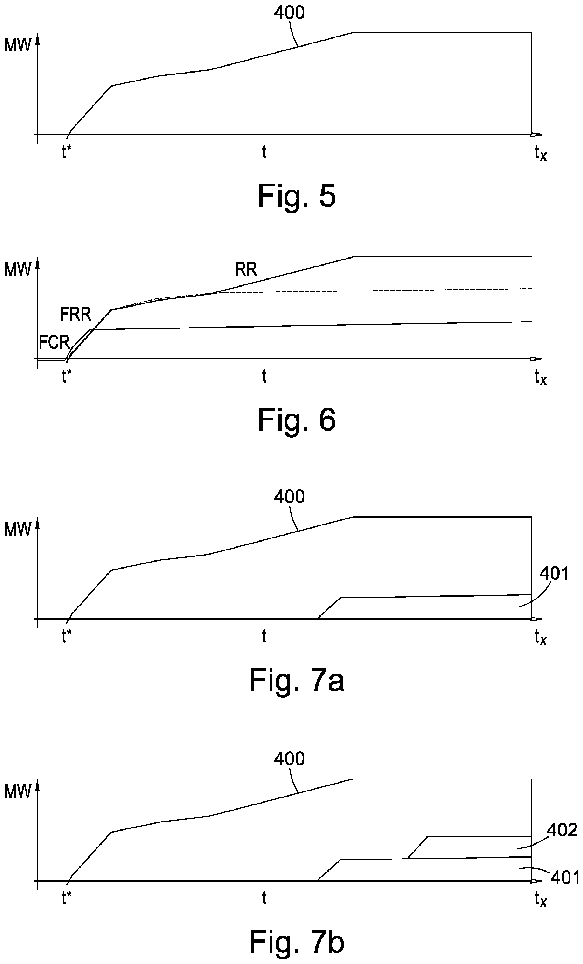

Firstly, at step 201, the central controller estimates the worst-case positive and negative reserve requirement over a next period of time, tₓ. For example, this process is repeated every two hours. The period of time may be decided by the TSO using an estimate of the imbalance, such as that shown in Figure 5, or by using the existing method of assigning FCR, FRR and RR, as depicted visually in Figure 6. In certain embodiments the period of time could be determined by the central controller.

Figure 5 shows a power reserve requirement curve 400 in terms of power required in MW over time, until the end of the time period tₓ. The curve in Figure 5 shows a positive reserve requirement and therefore only positive reserves are considered hereinafter. However, it will be appreciated that the reserve requirement could be negative.

Figure 6 shows a visual representation of the assignment of reserves using the well-known method of assigning FCR, then FRR and then RR. All reserves provided for each of the FCR, FRR and RR are activated simultaneously. In other words all of the FCR reserves are activated, then all of the FRR reserves are activated simultaneously and then all of the RR reserves are activated simultaneously. This is achieved by collating all of the power reserve flexibility characteristics received at the central controller. While this is a poor method for actually assigning reserves it is a very quick means for determining whether or not the available reserves will meet the reserve requirement.

At step 202, the characteristics of the available power reserves are determined. This includes all flexible reserves and controllable loads. In practice, each power reserve sends the central controller 300 information defining the power reserve flexibility characteristics of the respective power reserve, i.e. information enabling for generation of tiles representing power delivered over time, similar to those shown in Figure 3. The information received may be composite information for a group of reserves. Alternatively, the central controller itself may combine information to create combined information to simplify the allocation process.

Each power reserve is provided with the necessary processing functionality to calculate such characteristics.
At step 203, it is determined whether or not the available reserves are adequate to meet the estimated reserve requirement If the available reserves are not adequate to supply the estimated reserve requirement, then, at step 204, the TSO is informed of a potential blackout and may implement one or more emergency operation modes, for example, imposing local blackouts. The implementation and operation of these emergency modes is known in the art.

If the available reserves are adequate to meet the estimated reserve requirement, the reserves are sorted by cost, in ascending order, at operation 205. In order to sort the reserves in order by cost, the financial cost of the power supplied by each reserve is determined. This information is generally sent to the central controller with the power reserve flexibility characteristics. However, this information may be sent separately. In general, those reserves having large delays, low power capabilities, and/or slow maximum power delivery times are cheaper than those capable of providing high power quickly.

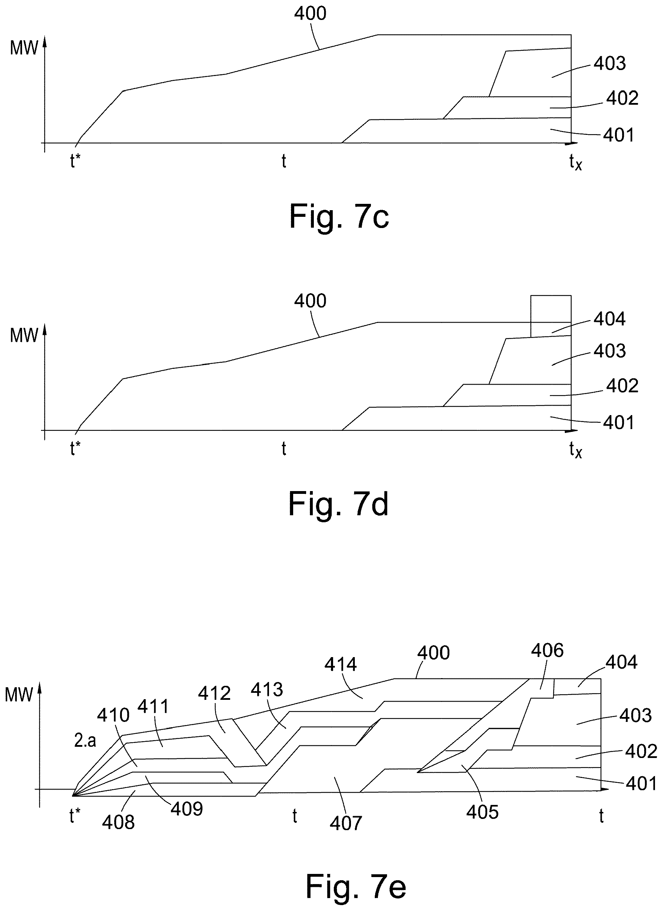

A power reserve's assignment procedure is then followed for the assignment of power reserves to meet the required reserve requirement. A "jigsaw puzzle" based approach is utilised to achieve this wherein the power reserves are assigned to provide the required power in cost order from cheapest to most expensive. The cost may assume different forms: a cost related to the full availability of a given reserve, a cost related to the amount of a given reserve that is consumed, or other combinations of these. The power delivery that can be achieved by the cheapest reserves is therefore maximised, while in contrast, use of the most expensive power reserves is minimised. This process shall be explained with reference to Figure 7.

Firstly, at step 206, the least expensive available power reserve 401 is allocated to supply the corresponding reserve requirement. It can be seen in Figure 7a that this power reserve 401 has a large delay time and a relatively low maximum power. However, this power reserve 401 is used in full and therefore the functionality of this cheap reserve is maximised.

At operation 207, a query is posed to determine if the cumulative power allocated to any time period is greater than the requirement. It can clearly be seen in Figure 7 that the cheapest reserve 401 does not provide the required power reserves at any instant in time.

Hence, the process moves to step 209, wherein it is determined if the cumulative allocated power supply has satisfied the entire reserve requirement. Graphically, this can clearly be seen by whether all of the space under the requirement curve is filled. It is clear from Figure 7 that after assigning the least expensive power reserve 401, the whole requirement has not been met. Consequently, the process moves to step 210 wherein the next reserve, i.e. the next cheapest reserve 402, is assigned.

Steps 207 and 209 are then repeated when allocating reserves 402, 403 and 404. The allocation of reserve 402 is shown in Figure 7b, the allocation of reserve 403 is shown in Figure 7c and the allocation of reserve 404 is shown in Figure 7d. It can therefore clearly be seen in Figure 7d that for reserve 404 it is determined that for a certain instant in time the power reserve requirement is met because the power that can be delivered by the reserve 404, in combination with the power delivered by reserves 401, 402 and 403, is greater than that required, i.e. the expected reserve requirement at that instant in time. Consequently, the reserve 404 is only instructed to provide the required amount of power reserve to meet the requirement rather than its full power reserve capabilities. Graphically, this can be represented by cutting off the power supplied by reserve 404 that is above the requirement line 400 (step 208 in Figure 4) as can be seen in Figure 7e. In practice, step 208 is achieved by determining the difference between the total power delivered by the cumulative reserves 401, 402 403, and 404 and the power reserve requirement, and then subtracting this difference from the power delivered by reserve 404. This procedure helps to reduce power supply costs.

The process of steps 207 to 210 is then repeated to assign reserves 405 to 414 until at step 207 for reserve 414 it is determined that the supply meets the requirement, i.e. in graphical terms, the area under the requirement curve 400 is filled by the power supplied by the reserves, as shown in Figure 7e. At this point the allocation process comes to an end at step 211. Since it has already been determined that supply is capable of meeting the reserve requirement the end will always be reached.

At the end 211 of the power allocation process, the central controller is then able to send out instructions to each of the reserves. These instructions inform each reserve when to supply power in accordance with their respective determined power allocation. It will be appreciated that in alternative implementations, the central controller sends out the instructions after each reserve is allocated, rather than when all reserves have been allocated.

The process of assigning power supply to the required reserve requirement using the mapping described with reference to Figure 4 can be displayed on a visual display unit for an operator of the central controller 300. The visual display unit can provide the mapping shown in the format provided in Figure 7. This allows for a user to visually assess the available reserves and any unsatisfied reserve requirement, and may further allow manual allocation of available reserves. The process of allocation of reserves may be shown by each reserve appearing or dropping into position under the reserve requirement curve. The cutting of additional power provided by reserves may also be shown graphically. Central controller 300 can be provided with an input device to enable to operator to perform such control. In this representation, online reserves are solid colour, offline reserves (because of incidents or depletion) are white, and committed reserves blink, with a blink speed indicative of proximity to depletion, i.e., infinite energy sources blink very slowly.

While throughout the Figures the power supplies are always depicted as being continuous, this is purely for simplicity of representation and explanation. It will be appreciated that in practice some of the supplies may be discrete in their supply.

In addition, it will be appreciated that the reserves need not only be ordered in terms of financial cost. For example, other indexing values could be used to determine the order of assigning the reserves for delivering the power. One indexing value is an environmental impact of a reserve delivering the power. A proprietary environmental indexing system could be used, or alternatively a known environmental indexing system could be used such as a carbon per MW. Utilising the system with an environmental indexing system is desirable because this will result in reducing carbon emissions within the power network. While many other indexing values are envisaged, one other example of an indexing value is the reliability of performance of a reserve based on its past supply performance.

While the central controller is primarily described as a single unit in the exemplary embodiment above, it will be appreciated that the central controller could be a distributed system. For example, different parts of the central controller functionality could be provided by different units distributed across a network. In addition, one or more of the functional components of the central controller could be provided by a cloud-based resource. In one alternative arrangement, the reserve allocation functionality is provided by one device, while the reserve instructions are sent out by a second device arranged to receive reserve allocation information from the first device.

The various methods described above may be implemented by a computer program. The computer program may include computer code arranged to instruct a computer to perform the functions of one or more of the various methods described above. For example, the various methods performed by the power reserves and the central controller may take the form of such a computer program. The computer program and/or the code for performing such methods may be provided to an apparatus, such as a computer or other data processing system, on a computer readable medium. The computer readable medium could be, for example, an electronic, magnetic, optical, electromagnetic, infrared, or semiconductor system, or a propagation medium for data transmission, for example for downloading the code over the Internet. Non-limiting examples of a physical computer readable medium include semiconductor or solid state memory, magnetic tape, a removable computer diskette, a random access memory (RAM), a read-only memory (ROM), a rigid magnetic disc, and an optical disk, such as a CD-ROM, CD-R/W or DVD.

An apparatus such as a computer may be configured in accordance with such computer code to perform one or more processes in accordance with the various methods discussed above.

The work leading to this invention has received funding from the European Union Seventh Framework Programme (FP7/2007-2013) under grant agreement number 251304.

## Claims

1. A method for allocating a plurality of power reserves to deliver power to a power network (100) to meet a power reserve requirement for balancing a frequency of the power network (100), the method comprising:
obtaining, for a plurality of power reserves of a power network (100), power reserve flexibility characteristics associated with each power reserve;
obtaining, for the plurality of power reserves, indexing values associated with the delivery of power by each respective power reserve;
determining a power reserve requirement associated with the power network (100);
and
assigning one or more of the plurality of power reserves to deliver power to the power network (100), the plurality of power reserves assigned in accordance with the power reserve flexibility characteristics associated with each of the power reserves, the indexing value associated with each respective power reserve, and the power reserve requirement associated with the power network (100), wherein the assigning comprises selecting one or more of the plurality power reserves to provide the power reserve requirement in order of the indexing values associated with the respective one or more power reserves.

2. The method according to claim 1, wherein the power reserve flexibility characteristics are indicative of power deliverable to the power network (100) by the respective power reserve with respect to time.

3. The method according to claim 1 or claim 2, wherein the power reserve flexibility characteristics include characteristics of positive and/or negative power reserve flexibility.

4. The method according to any one of claims 1 to 3, wherein the power reserve flexibility characteristics include one or more of:
a maximum deliverable power;
a period of time to provide the maximum deliverable power from receipt of an instruction for power delivery;
a minimum duration for sustaining the maximum deliverable power;
a period of time to reduce power delivery from the maximum deliverable power to a minimum deliverable power.

5. The method according to any preceding claim, where the assigning of one or more of the plurality of power reserves further comprises:
determining a portion of the power reserve requirement of the power network (100) provided by each selected power reserve in accordance with the respective power reserve flexibility characteristics of the power reserves.

6. The method according to claim 5, wherein assigning the one or more power reserves further comprises:
determining if, for a particular instance in time, the power reserve requirement is met by the assigned one or more power reserves;
assigning a next power reserve to deliver power to the power network (100) if the power reserve requirement is not met, the next power reserve determined from the order of the indexing values associated with the respective power reserves; and
adjusting a power to be delivered to the power network (100) by a most recently allocated reserve of the one or more power reserves that have been assigned to provide power at that instant in time to a level of power sufficient to meet the power reserve requirement at that instant in time if the power reserve requirement is met.

7. The method according to claim 6, wherein the power to be delivered by the most recently allocated reserve is adjusted by subtracting the difference between the power reserve requirement at that instant in time and a summation of a power to be delivered at that instant in time by each of the power reserves assigned to deliver power at that instant in time from the power to be delivered at that instant in time by the most recently allocated reserve assigned to deliver power at that instant in time.

8. The method according to any preceding claim, wherein assigning the one or more power reserves further comprises determining if the one or more assigned power reserves provide the power reserve requirement, and continuing assigning the reserves if the power reserve requirement is not met and stopping the assigning the reserves if the power reserve requirement is met.

9. The method according to any preceding claim, further comprising determining, prior to assigning one or more of the power reserves, whether or not the plurality of power reserves will be able to provide the power reserve requirement from the power reserve flexibility characteristics associated with the plurality of power reserves.

10. The method according to any preceding claim, wherein the power reserve requirement associated with the power network (100) is a power required to be delivered to the network (100) over a period of time.

11. The method according to any preceding claim, further comprising receiving the power reserve flexibility characteristics and receiving the indexing values, wherein the power reserve flexibility characteristics associated with the power reserves are received from the respective power reserves.

12. The method according to any preceding claim, further comprising instructing the power reserves to deliver power in accordance with the assignment of the power reserves.

13. The method according to any preceding claim, wherein the indexing value is a financial cost associated with the power reserve delivering the power.

14. An apparatus for allocating a plurality of power reserves to deliver power to a power network (100) to meet a power reserve requirement of the power network (100), the apparatus comprising:
a processor (301) arranged to perform the method of any preceding claim.

15. A computer readable medium comprising computer readable code operable, in use, to instruct a computer to perform the method of any one of claims 1 to 13.

## Patentansprüche

1. Verfahren zum Zuteilen mehrerer Leistungsreserven, um an ein Leistungsnetz (100) Leistung zu liefern, um einer Leistungsreservenanforderung zum Ausgleichen einer Frequenz des Leistungsnetzes (100) zu entsprechen, wobei das Verfahren Folgendes umfasst:
Erhalten von Leistungsreserven-Flexibilitätseigenschaften, die jeder Leistungsreserve zugeordnet sind, für mehrere Leistungsreserven eines Leistungsnetzes (100);
Erhalten von Indizierungswerten, die dem Liefern von Leistung durch die entsprechende Leistungsreserve zugeordnet sind, für die mehreren Leistungsreserven;
Bestimmen einer Leistungsreservenanforderung, die dem Leistungsnetz (100) zugeordnet ist; und
Zuweisen einer oder mehrerer der mehreren Leistungsreserven, um an das Leistungsnetz (100) Leistung zu liefern, wobei die mehreren Leistungsreserven gemäß den Leistungsreserven-Flexibilitätseigenschaften, die jeder der Leistungsreserven zugeordnet sind, dem Indizierungswert, der jeder entsprechenden Leistungsreserve zugeordnet ist, und der Leistungsreservenanforderung, die dem Leistungsnetz (100) zugeordnet ist, zugewiesen werden, wobei das Zuweisen das Auswählen einer oder mehrerer der mehreren Leistungsreserven umfasst, um die Leistungsreservenanforderung in der Reihenfolge der Indizierungswerte, die der entsprechenden einen oder den entsprechenden mehreren Leistungsreserven zugeordnet sind, bereitzustellen.

2. Verfahren nach Anspruch 1, wobei die Leistungsreserven-Flexibilitätseigenschaften eine Leistung anzeigen, die dem Leistungsnetz (100) durch die entsprechende Leistungsreserve in Bezug auf eine Zeit geliefert werden soll.

3. Verfahren nach Anspruch 1 oder Anspruch 2, wobei die Leistungsreserven-Flexibilitätseigenschaften Eigenschaften einer positiven und/oder negativen Leistungsreservenflexibilität umfassen.

4. Verfahren nach einem der Ansprüche 1 bis 3, wobei die Leistungsreserven-Flexibilitätseigenschaften Folgendes umfassen:
eine maximal lieferbare Leistung und/oder
einen Zeitraum ab dem Empfang einer Anweisung zur Leistungslieferung, um die maximal lieferbare Leistung bereitzustellen, und/oder
eine minimale Dauer zum Aufrechterhalten der maximal lieferbaren Leistung und/oder
einen Zeitraum, um die Leistungslieferung von der maximal lieferbaren Leistung auf eine minimal lieferbare Leistung zu verringern.

5. Verfahren nach einem der vorhergehenden Ansprüche, wobei das Zuweisen einer oder mehrerer der mehreren Leistungsreserven ferner Folgendes umfasst:
Bestimmen eines Abschnitts der Leistungsreservenanforderung des Leistungsnetzes (100), die von jeder ausgewählten Leistungsreserve gemäß den entsprechenden Leistungsreserven-Flexibilitätseigenschaften der Leistungsreserven bereitgestellt wird.

6. Verfahren nach Anspruch 5, wobei das Zuweisen der einen oder der mehreren Leistungsreserven ferner Folgendes umfasst:
Bestimmen, ob die Leistungsreservenanforderung für einen bestimmten Zeitpunkt von der einen oder den mehreren zugewiesenen Leistungsreserven erfüllt wird;
Zuweisen einer nächsten Leistungsreserve, um Leistung an das Leistungsnetz (100) zu liefern, wenn die Leistungsreservenanforderung nicht erfüllt wird, wobei die nächste Leistungsreserve aus der Reihenfolge der Indizierungswerte, die den entsprechenden Leistungsreserven zugeordnet sind, bestimmt wird; und
Anpassen einer Leistung, die durch eine zuletzt zugeteilte Reserve der einen oder der mehreren Leistungsreserven, die zugewiesen worden sind, um Leistung zu diesem Zeitpunkt zu liefern, an das Leistungsnetz (100) geliefert werden soll, an einen Leistungspegel, der ausreicht, die Leistungsreservenanforderung zu diesem Zeitpunkt zu erfüllen, wenn die Leistungsreservenanforderung erfüllt ist.

7. Verfahren nach Anspruch 6, wobei die von der zuletzt zugeteilten Reserve zu liefernde Leistung durch Subtrahieren der Differenz zwischen der Leistungsreservenanforderung zu diesem Zeitpunkt und einer Summation einer zu diesem Zeitpunkt von jeder der Leistungsreserven, die zu diesem Zeitpunkt zugewiesen wurden, um Leistung zu liefern, zu liefernden Leistung von der zu diesem Zeitpunkt von der zuletzt zugeordneten Reserve, die zugewiesen wurde, um zu diesem Zeitpunkt Leistung zu liefern, zu liefernden Leistung angepasst wird.

8. Verfahren nach einem der vorhergehenden Ansprüche, wobei das Zuweisen der einen oder der mehreren Leistungsreserven ferner das Bestimmen, ob die eine oder mehreren zugewiesenen Leistungsreserven die Leistungsreservenanforderung bereitstellen, das Fortsetzen des Zuweisens der Reserven dann, wenn die Leistungsreservenanforderung nicht erfüllt wird, und das Einstellen des Zuweisens der Reserven dann, wenn die Leistungsreservenanforderung erfüllt wird, umfasst.

9. Verfahren nach einem der vorhergehenden Ansprüche, das ferner vor dem Zuweisen einer oder mehrerer der Leistungsreserven das Bestimmen aus den Leistungsreservenflexibilitätsanforderungen, die den mehreren Leistungsreserven zugeordnet sind, ob die mehreren Leistungsreserven in der Lage sein werden, die Leistungsreservenanforderung bereitzustellen oder nicht, umfasst.

10. Verfahren nach einem der vorhergehenden Ansprüche, wobei die Leistungsreservenanforderung, die dem Leistungsnetz (100) zugeordnet ist, eine Leistung ist, deren Zufuhr zu dem Netz (100) über einen Zeitraum erforderlich ist.

11. Verfahren nach einem der vorhergehenden Ansprüche, das ferner das Empfangen der Leistungsreserven-Flexibilitätseigenschaften und das Empfangen der Indizierungswerte umfasst, wobei die den Leistungsreserven zugeordneten Leistungsreserven-Flexibilitätseigenschaften von den entsprechenden Leistungsreserven empfangen werden.

12. Verfahren nach einem der vorhergehenden Ansprüche, das ferner das Anweisen der Leistungsreserven, Leistung gemäß der Zuweisung der Leistungsreserven zu liefern, umfasst.

13. Verfahren nach einem der vorhergehenden Ansprüche, wobei der Indizierungswert finanzielle Kosten sind, die der Leistungsreserve, die die Leistung liefert, zugeordnet sind.

14. Vorrichtung zum Zuteilen mehrerer Leistungsreserven, um Leistung an ein Leistungsnetz (100) zu liefern, um eine Leistungsreservenanforderung des Leistungsnetzes (100) zu erfüllen, wobei die Vorrichtung Folgendes umfasst:
einen Prozessor (301), der ausgelegt ist, das Verfahren nach einem vorhergehenden Anspruch durchzuführen.

15. Computerlesbares Medium, das computerlesbaren Code enthält, der betreibbar ist, im Betrieb einen Computer anzuweisen, das Verfahren nach einem der Ansprüche 1 bis 13 auszuführen.

## Revendications

1. Procédé d'affectation d'une pluralité de réserves d'énergie pour distribuer de l'énergie à un réseau électrique (100) pour satisfaire un besoin de réserve d'énergie afin d'équilibrer une fréquence du réseau électrique (100), le procédé comprenant :
l'obtention, pour une pluralité de réserves d'énergie d'un réseau électrique (100), caractéristiques de souplesse de réserve d'énergie associées à chaque réserve d'énergie ;
l'obtention, pour la pluralité de réserves d'énergie, de valeurs d'indexation associées à la distribution d'énergie par chaque réserve d'énergie respective ;
la détermination d'un besoin de réserve d'énergie associé au réseau électrique (100) ;
et
l'affectation d'une ou plusieurs de la pluralité de réserves d'énergie pour distribuer de l'énergie au réseau électrique (100), la pluralité de réserves d'énergie étant affectée conformément aux caractéristiques de souplesse de réserve d'énergie associées à chacune des réserves d'énergie, à la valeur d'indexation associée à chaque réserve d'énergie respective, et au besoin de réserve d'énergie associé au réseau électrique (100), dans lequel l'affectation comprend la sélection d'une ou plusieurs de la pluralité de réserves d'énergie pour approvisionner le besoin de réserve d'énergie dans l'ordre des valeurs d'indexation associées aux une ou plusieurs réserves d'énergie respectives.

2. Procédé selon la revendication 1, dans lequel les caractéristiques de souplesse de réserve d'énergie sont indicatives de l'énergie pouvant être fournie au réseau électrique (100) par la réserve d'énergie respective par rapport au temps.

3. Procédé selon la revendication 1 ou la revendication 2, dans lequel les caractéristiques de souplesse de réserve d'énergie comportent des caractéristiques de souplesse de réserve d'énergie positives et/ou négatives.

4. Procédé selon l'une quelconque des revendications 1 à 3, dans lequel les caractéristiques de souplesse de réserve d'énergie comportent l'une ou plusieurs d'une :
énergie maximum pouvant être distribuée ;
période de temps pour approvisionner l'énergie maximum pouvant être distribuée à compter de la réception d'une instruction de distribution d'énergie ;
durée minimum de maintien de l'énergie maximum pouvant être distribuée ;
période de temps pour réduire la distribution d'énergie de l'énergie maximum pouvant être distribuée à une énergie minimum pouvant être distribuée.

5. Procédé selon l'une quelconque des revendications précédentes, dans lequel l'affectation d'une ou plusieurs de la pluralité de réserves d'énergie comprend en outre :
la détermination d'une partie du besoin de réserve d'énergie du réseau électrique (100) approvisionnée par chaque réserve d'énergie sélectionnée conformément aux caractéristiques de souplesse de réserve d'énergie respectives des réserves d'énergie.

6. Procédé selon la revendication 5, dans lequel l'affectation des une ou plusieurs réserves d'énergie comprend en outre :
la détermination que, pendant un instant particulier dans le temps, le besoin de réserve d'énergie est satisfait ou non par les une ou plusieurs réserves d'énergie affectées ;
l'affectation d'une réserve d'énergie suivante pour distribuer de l'énergie au réseau électrique (100) si le besoin de réserve d'énergie n'est pas satisfait, la réserve d'énergie suivante étant déterminée suivant l'ordre des valeurs d'indexation associées aux réserves d'énergie respectives ; et
le réglage d'une énergie à distribuer au réseau électrique (100) par une réserve la plus récemment affectée des une ou plusieurs réserves d'énergie qui ont été affectées pour approvisionner de l'énergie à cet instant dans le temps à un niveau d'énergie suffisant pour satisfaire le besoin de réserve d'énergie à cet instant dans le temps si le besoin de réserve d'énergie est satisfait.

7. Procédé selon la revendication 6, dans lequel l'énergie devant être délivrée par la réserve la plus récemment affectée est ajustée en soustrayant la différence entre le besoin de réserve d'énergie à cet instant dans le temps et une somme d'une énergie devant être distribuée à cet instant dans le temps par chacune des réserves d'énergie affectées pour fournir de l'énergie à cet instant dans le temps de l'énergie devant être distribuée à cet instant dans le temps par la réserve la plus récemment affectée pour distribuer de l'énergie à cet instant dans le temps.

8. Procédé selon l'une quelconque des revendications précédentes, dans lequel l'affectation des une ou plusieurs réserves d'énergie comprend en outre la détermination que les une ou plusieurs réserves d'énergie affectées approvisionnent ou non le besoin de réserve d'énergie, et la continuation de l'affectation des réserves si le besoin de réserve d'énergie n'est pas satisfait et l'arrêt de l'affectation des réserves si le besoin de réserve d'énergie est satisfait.

9. Procédé selon l'une quelconque des revendications précédentes, comprenant en outre la détermination, avant l'affectation d'une ou plusieurs des réserves d'énergie, que la pluralité de réserves d'énergie sera ou non en mesure d'approvisionner le besoin de réserve d'énergie à partir des caractéristiques de souplesse de réserve d'énergie associées à la pluralité de réserves d'énergie.

10. Procédé selon l'une quelconque des revendications précédentes, dans lequel le besoin de réserve d'énergie associé au réseau électrique (100) est une énergie devant être distribuée au réseau (100) durant une période de temps.

11. Procédé selon l'une quelconque des revendications précédentes, comprenant en outre la réception des caractéristiques de souplesse de réserve d'énergie et la réception des valeurs d'indexation, dans lequel les caractéristiques de souplesse de réserve d'énergie associées aux réserves d'énergie sont reçues depuis les réserves d'énergie respectives.

12. Procédé selon l'une quelconque des revendications précédentes, comprenant en outre l'instruction aux réserves d'énergie de distribuer de l'énergie conformément à l'affectation des réserves d'énergie.

13. Procédé selon l'une quelconque des revendications précédentes, dans lequel la valeur d'indexation est un coût financier associé à la réserve d'énergie qui distribue l'énergie.

14. Appareil d'affectation d'une pluralité de réserves d'énergie pour distribuer de l'énergie à un réseau électrique (100) pour satisfaire un besoin de réserve d'énergie du réseau électrique (100), l'appareil comprenant :
un processeur (301) agencé pour exécuter le procédé selon l'une quelconque des revendications précédentes.

15. Support lisible par ordinateur comprenant un code lisible par ordinateur exploitable, en service, pour ordonner à un ordinateur d'exécuter le procédé selon l'une quelconque des revendications 1 à 13.
